Europäisches Patentamt

European Patent Office

Office européen des brevets

(19)

(11) EP 0 748 773 B1

(12) **EUROPÄISCHE PATENTSCHRIFT**

(45) Veröffentlichungstag und Bekanntmachung des Hinweises auf die Patenterteilung:
**27.01.1999 Patentblatt 1999/04**

(51) Int. Cl.$^6$: **C03B 5/24**, C03B 5/235, C03B 5/03

(21) Anmeldenummer: **96108994.3**

(22) Anmeldetag: **05.06.1996**

(54) **Verfahren zur Regelung der Beheizung von Glas-Wannenöfen**

Method for controlling the heating of a glass-melting tank furnace

Procédé de régulation du chauffage d'un four à cuve de fusion de verre

(84) Benannte Vertragsstaaten:
**AT BE CH DE ES FR GB IT LI NL**

(30) Priorität: **13.06.1995 DE 19521513**

(43) Veröffentlichungstag der Anmeldung:
**18.12.1996 Patentblatt 1996/51**

(73) Patentinhaber:
**Beteiligungen Sorg GmbH & Co. KG**
**D-97816 Lohr (DE)**

(72) Erfinder:
**Pieper, Helmut, Dipl-Ing.**
**97816 Lohr am Main (DE)**

(74) Vertreter:
**Zapfe, Hans, Dipl.-Ing.**
**Postfach 20 01 51**
**63136 Heusenstamm (DE)**

(56) Entgegenhaltungen:
**US-A- 3 954 433**    **US-A- 4 028 083**

**Beschreibung**

Die Erfindung betrifft ein Verfahren zur Regelung der Beheizung von Glas-Wannenöfen mit einem Oberofen und einem Unterofen, in dem aus Chargiermaterial eine Glasschmelze mit einem Schmelzenspiegel gebildet und daraus abgezogen wird, mit mindestens einem dem Oberofen zugeordneten Brenner, durch den eine zum Schmelzen erforderliche Energiemenge eingebracht wird, wobei Temperaturen und Mengen von Brennstoff, Verbrennungsluft und Beschickungsgut und Wärmemengen der Glasschmelze bestimmt werden.

Sowohl das Chargiermaterial als auch die daraus gebildete Glasschmelze sind problematische Stoffe. Das Aufschmelzverhalten des zunächst auf der Glasschmelze schwimmenden Chargiermaterials ist sehr stark von dessen Zusammensetzung abhängig. Das Chargiermaterial neigt zur Schaumbildung und hat eine schlechte Wärmeleitfähigkeit. Auch die Glasschmelze selbst hat eine ungünstige Wärmeleitfähigkeit, was zur Ausbildung von Temperaturgradienten und Viskositätsunterschieden und damit zu unterschiedlich verteilten Strömungsgeschwindigkeiten führt. Problematisch ist dabei insbesondere, daß der Wärmebedarf der im Unterofen, im sogenannten Bassin, befindlichen Glasschmelze durch den Wärmetransport durch den Schmelzenspiegel hindurch gedeckt werden muß, wenn man nicht im Unterofen Heizelektroden vorsieht, die mit Elektroenergie versorgt werden müssen. Daraus resultieren folgende Probleme, die der Fachwelt bekannt sind:

Glasschmelzwannen haben in ihrer Regelcharakteristik eine sehr große Totzeit, die das Ausregeln äußerst schwierig gestaltet. Die Summe der Einflußgrößen, die die Änderung der Glasbadtemperatur, die Durchlaufzeit und die Qualität des Glases bestimmen, sind so vielfältig und ihre Wirkungen aufeinander sind so komplex, daß mit den Einzelregelungen, die jeweils nur einzelne Betriebsparameter der Wanne konstant halten, keine konstante Wannenfahrweise ermöglicht wird.

Periodische Schwankungen von Störgrößen, wie Scherbenmenge, Scherbenqualität und Entnahmemenge können im Zeitverlauf von mehreren Tagen schwanken, so daß sich ihre Wirkungen über Tage hinweg addieren können, was ihre Ausregelung mit herkömmlichen Reglern äußerst schwierig gestaltet.

Ein wesentlicher Störfaktor für den Betrieb der Wanne ist die Schaumbildung auf der Glasbadoberfläche, die unter bestimmten Bedingungen auftritt. Die Schaumbildung ist einmal von der Gemengezusammensetzung, vom Verhältnis Gemenge/Scherben und vom Verhältnis der unterschiedlichen Scherben zueinander bzw. deren $SO_3$-Gehalt abhängig. Gläser mit unterschiedlichen $SO_3$-Gehalten reagieren unter Schaumbildung während des Schmelzens miteinander. Die hohen Recyclingraten, insbesondere bei Hohlglas, haben dazu geführt, daß Mischscherben unterschiedlichster Herkunft eingesetzt werden, deren Schaumbildungspotential nicht vorausgesagt werden kann.

Weiterhin wird die Schaumbildung durch die Redox-Bedingungen sowohl im Gemenge als auch in der Flamme beeinflußt, d.h., jede Änderung des Verhältnisses Brennstoff/Luft und der Flammenlage über dem Schmelzenspiegel führt zu unterschiedlicher Schaumbildung. Dieser auf dem Schmelzenspiegel auftretende Schaum isoliert die Glasschmelze gegen die Flammenstrahlung, so daß die Wärmestromdichte vom Oberofen in den Unterofen sowie in die Glasschmelze ständigen Schwankungen unterworfen ist.

Durch die US-PS 4,405,351 und den Aufsatz von T. H. Finger "Digital Control of Glass Manufacture" in GLASS INTERNATIONAL, März 1979, S. 65 bis 71, ist es bekannt, Glastemperaturen in der Wanne und Gastemperaturen unter der Ofendecke zu messen, mittels Koeffizienten quantitativ und qualitativ zu bewerten und zu regelungstechnischen Zwecken erforderlichenfalls miteinander zu verknüpfen. Dadurch sollen die Energiezufuhr zum Oberofen und der Wärmestrom in die Glasschmelze geregelt werden. Ein außerordentlicher Schwachpunkt ist hierbei die Beeinflussung durch die Temperaturmessungen in der Glasschmelze, was nachstehend näher erläutert wird:

Messungen der Glasbadtemperatur im Unterofen bringen keine brauchbaren Ergebnisse, weil die hierfür erforderlichen Temperaturfühler nur am Boden des Bassins eingebaut werden können. Eine Änderung des Wärmetransports durch den Schmelzenspiegel führt erst nach Stunden zu einer Temperaturänderung am Boden des Bassins und damit erst nach Stunden zu einem Regeleingriff. Die Schaumbedingungen können sich aber nach Stunden schon wieder grundlegend geändert haben, so daß eine Temperaturregelung, die auf Temperaturfühlern in der Glasschmelze basiert, zu einem Aufschaukeln des Regelverhaltens führt.

Analoge Überlegungen gelten für den Fall einer Temperaturregelung, bei der die Temperatur im Oberofen als Führungsgröße herangezogen wird. Die betreffenden Temperaturfühler werden in dem Augenblick, in dem eine Schaumbildung auf der Glasschmelze stattfindet, eine höhere Temperatur anzeigen, weil der Schaum einen erheblichen Anteil der Energie der Flamme gegen das Gewölbe des Bassins zurückstrahlt. Die Folge ist, daß die Glasbadtemperatur beim Auftreten vom Schaum fällt, obwohl die Temperaturanzeige am Gewölbe ansteigt. Eine Temperaturregelung wäre in diesem Fall absolut kontraproduktiv, weil eine Verringerung der Energiemenge die Glasbadtemperaturen noch weiter absinken lassen würde.

Eine weitere bekannte Möglichkeit, nämlich eine sogenannte Festwertregelung, d.h., eine Regelung, die die Luft- und Brennstoffmengen entsprechend der zu schmelzenden Menge des Chargiermaterials konstant hält, kann den Einfluß der Schaumbildung auf der Schmelzbadoberfläche nicht berücksichtigen und führt damit zu ständig wechselnden Temperaturen in der Glasschmelze und damit zu Qualitätsschwankungen im Glas, welches aus dem Durchlaß des Wannenofens abgezogen wird.

In der Praxis wird daher aus Sicherheitsgründen so verfahren, daß die dem Wannenofen zugeführte Energiemenge so hoch gewählt wird, daß selbst beim Auftreten von Schaum auf der Glasbadoberfläche der Wärmetransport durch diese hoch genug bleibt, um die erforderliche Qualität des Glases zu garantieren. Dies führt aber dazu, daß bei geringerer Schaumbildung die Temperatur im Glasbad und damit auch die Temperatur des Glases am Einlauf in eine Arbeitswanne oder in einen Verteilerkanal ansteigt. Diese Verfahrensweise führt einerseits zu einem höheren Energieverbrauch, als dieser theoretisch notwendig wäre, und andererseits zu ständig wechselnden Temperaturen im Einlauf der Arbeitswanne oder des Verteilerkanals, wodurch das Ausregeln der Temperaturabweichungen in der Arbeitswanne, im Verteilerkanal und in den Vorherden deutlich erschwert wird.

Um diese Schwierigkeiten zu verringern, ist es bekannt, Wannen bzw. Bassins mit elektrischen Zusatzbeheizungen auszurüsten, da die elektrische Energie mit einem Wirkungsgrad von nahezu 100 % über Heizelektroden in die Glasschmelze eingeleitet werden kann. Mit solchen Zusatzbeheizungen gelingt es, die Mindesttemperaturen aufrechtzuerhalten, die zu einer akzeptablen Qualität des Glases führen. Da die elektrische Energie jedoch wesentlich teurer als die fossile Energie ist, gestaltet sich eine solche Fahrweise eines Glas-Wannenofens sehr kostenintensiv.

Der Erfindung liegt daher die Aufgabe zugrunde, ein Regelverfahren der eingangs beschriebenen Gattung dahingehend zu verbessern, daß der thermische Wirkungsgrad der gesamten Anlage verbessert, aber auch die Glasqualität am Auslauf der Wanne bzw. des Bassins in engen Grenzen konstant gehalten werden kann.

Die Lösung der gestellten Aufgabe erfolgt bei dem eingangs angegebenen Regelverfahren erfindungsgemäß dadurch, daß laufend aus schmelztechnischen Daten und konstruktionsbedingten thermischen Daten des Glas-Wannenofens eine Wärmestromdichte durch den Schmelzenspiegel berechnet wird, wobei

a) zunächst ständig eine Gesamtwärmebilanz für den gesamten Ofen errechnet wird,

b) von in der Gesamtwärmebilanz enthaltenen und errechneten Wand-, Kühl- und Leckverlusten die ofenbedingten, nahezu unveränderlichen Wand- und Kühlverluste des Unterofens abgezogen werden,

c) aus einer Wärmebilanz des Oberofens ein Istwert für den Wärmestrom berechnet wird, der an die Glasschmelze übergeben wird,

d) aus einer Wärmebilanz des Unterofens ein Sollwert für den Wärmestrom errechnet wird, der an die Glasschmelze übergeben und der ständig mit dem unter c) genannten Istwert für den Wärmestrom verglichen wird, und daß

e) die Differenz der beiden Werte durch Änderung der Energiezufuhr verzögerungsfrei auf einen kleinstmöglichen Wert ausgeregelt wird.

Mit dem erfindungsgemäßen Regelverfahren ist es möglich, bei kleinstmöglichem Energiebedarf einen größtmöglichen Gleichförmigkeitsgrad hinsichtlich Temperatur und Zusammensetzung der aus dem Glas-Wannenofen abgezogenen Glasschmelze zu erzielen.

Zum besseren Verständnis der Zusammenhänge werden die wesentlichsten schmelztechnischen und thermischen Daten des Glas-Wannenofens wie folgt angegeben:
Zu diesen Daten gehören:

- die Brennstoffmenge
- der Heizwert des Brennstoffs
- die Verbrennungsluftmenge, aufgeteilt in Sekundär- und Primärluft
- die Vorwärmung der Verbrennungsluft
- die Abgastemperatur
- der $O_2$-Gehalt im Abgas
- die Zusammensetzung des Chargiermaterials und dessen Temperatur

  - der Gemengeanteil
  - dessen Zusammensetzung
  - der Scherbenanteil
  - dessen Zusammensetzung
  - der Feuchtigkeitsgehalt (Verdampfungswärme)
  - die Schmelzwärme

- der Glasdurchsatz
- die Glastemperatur im Durch- bzw. Auslaß
- eine etwa zugeführte elektrische Leistung
- die Außenwandtemperatur des Unterofens und
- die Umgebungslufttemperatur des Unterofens.

Die betreffenden Daten bzw. Parameter stehen jederzeit zur Verfügung, und zwar entweder durch Berechnung und/oder Messung, wobei die Messungen entweder kontinuierlich oder in kurzen Intervallen durchgeführt werden können, also quasi-kontinuierlich. Daraus lassen sich Wärmebilanzen für den gesamten Ofen, für den Oberofen einerseits und für den Unterofen andererseits erstellen. Bedingt durch die hohen Rechnergeschwindigkeiten eines normalen PCs liegt der Wert der Istwertabweichung vom Sollwert ständig vor und kann zur Regelung der Energiemenge extrem kurzzeitig herangezogen werden, und zwar sowohl zur Regelung der Menge der fossilen Energie als auch gegebenenfalls der elektrischen Energie zum Unterofen. Da die genannten Meßwerte verzögerungsfrei vorliegen, ist stets der genaue Wärmestrom vom Oberofen zum Unterofen durch den Schmelzenspiegel bekannt und kann verzögerungsfrei in Richtung auf den Sollwert ausgeregelt werden. Der Schmelzenspiegel ist dabei gewissermaßen die Bezugsebene für den Wärmestrom. Die Differenz zwischen beiden Werten ist die Regelabweichung.

Es geht, wohlgemerkt, nicht um die Messung der Temperatur der Glasschmelze in der Wanne und um die Beeinflussung der Regelung durch eine solche Temperaturmessung, die nur um Stunden verzögert Meßwerte liefern würde, sondern um die Messung sofort verfügbarer Istwerte und deren rechnerische Auswertung und Verknüpfung mit zumindest weitgehend über lange Zeiten konstanten und aus dem Verfahrensablauf bekannten oder gemessenen Größen.

So berechnet sich beispielsweise die Wärmebilanz des Oberofens wie folgt:

$$Q_{GB} = Q_B + Q_A - Q_{WLKO} - Q_X \qquad (1)$$

wobei:

$Q_{GB}$ = Wärmestrom vom Oberofen zum Bassin
$Q_B$ = Brennstoffmenge
$Q_A$ = Enthalpie der Verbrennungsluft
$Q_{WLKO}$ = Summe aller Wand-, Leck- und Kühlverluste des Oberofens
$Q_X$ = Enthalpie des Abgases beim Verlassen des Ofens.

Die Wärmebilanz des Unterofens bzw. Bassins läßt sich wie folgt berechnen:

$$Q_{GB} = Q_{GLAS} + Q_{WKB} + Q_E - Q_C - Q_{el} \qquad (2)$$

wobei:

$Q_C$ = Enthalpie des Chargiermaterials
$Q_{el}$ = elektrische Heizleistung
$Q_{GLAS}$ = Enthalpie des Glases beim Verlassen des Bassins (Solltemperatur ist vorgegeben)
$Q_{WKB}$ = Wand- und Kühlverluste des Bassins
$Q_E$ = endotherme Schmelzwärme und Energie zum Zersetzen von Karbonaten und zur Bildung von Silikaten.

Von besonderer Bedeutung ist hierbei das Merkmal b): Wand-, Kühl- und Leckverluste des Oberofens lassen sich kaum direkt und kurzfristig erfassen, sehr wohl aber die über lange Zeit konstanten und auch sofort berechenbaren Wand- und Kühlverluste des Bassins. Daraus ergibt sich nun:

$$Q_{WLKO} = Q_{WLK} - Q_{WKB} \qquad (3)$$

wobei:

$Q_{WLK}$ = Summe aller Wand-, Leck- und Kühlverluste des gesamten Ofens.

Diese wiederum lassen sich wie folgt berechnen:

$$Q_{WLK} = Q_B + Q_A + Q_C + Q_{el} - Q_{GLAS} - Q_E - Q_X \qquad (4)$$

Es handelt sich sämtlich um sofort verfügbare und/oder berechenbare Werte, und nach Einfügung von $Q_{WLKO}$ (3) in (1) läßt sich auch der Wärmestrom $Q_{GB}$ vom Oberofen zum Bassin bestimmen und - vor allem - regelungstechnisch kurzfristig beeinflussen.

Die besagte Gesamtwärmebilanz gibt Aufschluß über die Summe der Wand-, Kühl- und Leckverluste. Von der Summe der gesamten Wand-, Kühl- und Leckverluste werden sodann die Verluste des Unterofens subtrahiert. Die Verluste des Unterofens sind reine Wand- und Kühlverluste und aufgrund verhältnismäßig stabiler Temperaturen nahezu konstant, außerdem ist ihr prozentualer Anteil an den Gesamtverlusten relativ niedrig. Bei Abweichungen der Aussenwandtemperatur des Unterofens und/oder der Umgebungsluft wird ihr Wert korrigiert. Leckverluste treten am Unterofen nicht auf.

Die so ermittelten Wand-, Kühl- und gegebenenfalls Leckverluste werden jeweils in eine Wärmebilanzrechnung des Oberofens und des Unterofens eingesetzt. Aus der Oberofenbilanz kann nun der Wärmestrom, der vom Oberofen durch den Schmelzenspiegel in das Glasbad eingebracht wird, exakt bestimmt werden, wie vorstehend aufgezeigt wurde.

Dieser Wärmestrom wird nun mit einem errechneten Sollwert aus der Wärmebilanz des Unterofens verglichen, die sich aus dem Durchsatz, aus der Gemengezusammensetzung, aus dem Scherben- und Gemengeverhältnis, aus den Wandverlusten des Unterofens und aus der Solltemperatur der Glasschmelze am Durchlaß ergibt, gegebenenfalls abzüglich der in den Unterofen eingespeisten Elektroenergie. Für die Gemengezusammensetzung kann der endotherme Energiewert, d.h., die Energiemenge, die zur Dissoziation der Karbonate und zur Silikatbildung benötigt wird, ebenfalls bestimmt werden.

Das erfindungsgemäße Regelverfahren führt im einzelnen zu folgenden Vorteilen:

Wie bereits weiter oben erläutert wurde, müssen bei der bekannten Betriebsweise eines Glas-Wannenofens überschüssige Energiemengen zugeführt werden, um sicherzustellen, daß bei einem geringen Wärmestrom aufgrund einer Schaumbildung auf dem Glasbad eine ausreichende Glasqualität erreicht wird. Bei der erfindungsgemäßen Regelung des benötigten Wärmestroms ist ein Überschuß an zugeführter Energie nicht mehr erforderlich, so daß eine erhebliche Einsparung im Energieverbrauch eintritt, die zwischen etwa 5 und 10 % des gesamten Energiebedarfs liegt.

Neben der Energieeinsparung ergeben sich weitere Vorteile, die sich auf die Ausregelung des gesamten Prozesses beziehen. Wie bereits gesagt, ist bei der erfindungsgemäßen Regelung ständig der Wärmestrom als Regelgröße verfügbar. Wenn nun der Wärmestrom bei konstanter Energiezufuhr zum Oberofen fällt, müssen zwangsläufig die Abgasverluste und/oder die Wand-, Kühl- und Leckverluste im Oberofen ansteigen. Ein solches Verhalten ist alsdann eindeutig auf eine Schaumbildung auf dem Schmelzenspiegel zurückzuführen. Damit ist das Verhältnis zwischen dem Wärmestrom einerseits und der dem Oberofen zugeführten Energiemenge andererseits bereits ein Maß für die Menge an Schaum, der sich auf der Schmelzenoberfläche gebildet hat. Eine Regelung kann in diesem Falle auch dadurch erfolgen, daß das Verhältnis von Brennstoff zu Luft, der sogenannte Lambda-Wert, geändert wird.

Bei reduzierender Atmosphäre im Oberofen ist erfahrungsgemäß die Schaumbildung geringer, so daß der Sauerstoffgehalt im Abgas im Rahmen realistischer Möglichkeiten bis auf einen Grenzwert reduziert werden kann. Ist eine Reduzierung des Sauerstoffgehalts auf ein Minimum nicht für eine genügende Reduzierung der Schaummenge ausreichend, kann der Lambda-Wert noch weiter abgesenkt werden und zusätzlich kann vor dem Rekuperator oder Regenerator etwas Frischluft dem Abgas beigemischt werden. Damit ist beim erfindungsgemäßen Verfahren zum ersten Mal die Möglichkeit gegeben, die Schaumbildung beim Schmelzprozeß unmittelbar ohne manuelles Eingreifen zu verringern.

Ein weiterer Vorteil des erfindungsgemäßen Regelverfahrens liegt im Optimieren des Verhältnisses zwischen der eingespeisten elektrischen Energie in die Glasschmelze und der Brennerbeheizung des Oberofens mit fossilen Brennstoffen nach Kostengesichtspunkten. Die Einspeisung elektrischer Energie in das Glasbad erfolgt mit einem Wirkungsgrad von nahezu 100 %, abzüglich der Kühlverluste für die Elektrodenhalter, so daß je nach der eingespeisten Energiemenge mit einem Energiewirkungsgrad von 95 bis 98 % bei der Elektrobeheizung gerechnet werden kann.

Die Wirtschaftlichkeit der Brennerbeheizung im Oberofen wird durch den feuerungstechnischen Wirkungsgrad bestimmt. Wenn zur Erhöhung des Wärmestroms auf das geforderte Maß höhere Kosten durch die Erhöhung der Brennstoffmenge entstehen als über ein Einspeisen der Energie durch Strom in den Unterofen, ist es günstiger, die elektrische Energiemenge zu erhöhen und die Brennstoffmenge konstant zu halten und umgekehrt.

Werden beispielsweise die Kosten für Strom und Heizgas in einen Rechner eingegeben, so ist dieser jederzeit mittels einer geeigneten Software in der Lage, das optimale Verhältnis zwischen der Befeuerung des Oberofens durch Gas und der Einspeisung elektrischer Energie in den Unterofen festzulegen.

So ergibt sich z.B. aus Stromkosten von 0,13 DM/kWh und Gaskosten von 0,03 DM/kWh und einem Wirkungsgrad des eingesetzten Stroms von 95 %, daß es bei einem Unterschreiten des Wärmestroms, dieser 24,3 % der eingegebenen Wärmeenergie ausmacht, es günstiger ist, Strom statt Gas einzusetzen.

Auch diese Art der Regelung kann von dem angesprochenen Prozeßregler zusätzlich ausgeführt werden. Der geschilderte Fall kann durchaus eintreten, wenn sehr hohe Feuerraumbelastungen erforderlich werden, beispielsweise bei Maximallast der Wanne, oder wenn sehr viel Schaum auf dem Glasbad entstanden ist, welcher sich nicht entfernen läßt.

Ein weiterer Vorteil des Erfindungsgegenstandes ist der, daß die Glasqualität exakter vorherbestimmbar ist, als dies mit den bekannten Regelverfahren möglich war. Das Glasschmelzen ist ein Zeit- und Temperaturprozeß. Bei den bekannten Verfahren sind üblicherweise weder die Verweilzeit noch die Temperaturen konstant zu halten. Mit dem erfindungsgemäßen Regelverfahren und der Konstanthaltung des Wärmestroms ergibt sich im laufenden Betrieb, daß die Glasbadtemperaturen im Mittel absolut konstant bleiben, d.h., daß bei konstantem Durchsatz eine gleichbleibende Qualität erzielt wird. Bei Änderungen des Durchsatzes ändert sich naturgemäß die mittlere Verweilzeit des Glases in der Anlage, wobei bei mäßigen Abweichungen das Verhältnis zwischen minimaler Verweilzeit zu mittlerer Verweilzeit bei ein und derselben Wanne relativ konstant bleibt.

Wenn die mittlere Verweilzeit, die sich aus dem Volumen des Bassins und dem durchgesetzten Volumen pro Zeiteinheit ergibt, in Relation zum Wärmestrom gesetzt wird, ist es möglich, eine kürzere Verweilzeit durch einen höheren Wärmestrom zu kompensieren, so daß auch bei sich ändernden Durchsätzen der Wanne durch Änderungen des Wärmestroms unter Berücksichtigung der mittleren Verweilzeit die gleiche Qualität wie bei anderen Wannenbelastungen aufrechterhalten werden kann.

Dies bedeutet allerdings, daß die Glastemperatur hinter dem Durchlaß mit jedem Durchsatz einen anderen Wert annimmt. Mit welchem Faktor der spezifische Wärmestrom multipliziert werden muß, um sich ändernde mittlere Durchlaufzeiten zu kompensieren, ist für jede Wanne spezifisch, kann aber durch einfache Versuche herausgefunden werden.

Das erfindungsgemäße Verfahren läßt sich auch bei Glasschmelzwannen mit mehreren Zonen anwenden. Wenn die Zwischentemperaturen zwischen den Zonen sowohl im Oberbau als auch im Bassinbereich bekannt sind oder relativ genau abgeschätzt werden können, ist es durchaus möglich, das erfindungsgemäße Verfahren für jede einzelne Zone dieser Wanne getrennt anzuwenden. Dabei kann die Schmelze und der Läuterprozeß getrennt bilanziert und beeinflußt werden, was zu einer weiteren Optimierung des Glasschmelzprozesses führt.

Ein Ausführungsbeispiel des Erfindungsgegenstandes wird nachfolgend anhand der Figuren 1 bis 3 näher beschrieben.

Es zeigen:

Figur 1    einen Längsschnitt durch eine Glasschmelzanlage bis zum Auslauf in Verbindung mit einer Regel- und Schaltungsanordnung für die Erfassung der einzelnen Fühlersignale und für die Ansteuerung verschiedener Stellglieder für Gasbrenner, Bodenelektroden, Frischluftzufuhr und Chargiervorrichtung für die Rohstoffe,

Figur 2    eine vereinfachte Darstellung einer Glasschmelzanlage analog Figur 1, und

Figur 3    ein Energieflußdiagramm in Prinzipdarstellung.

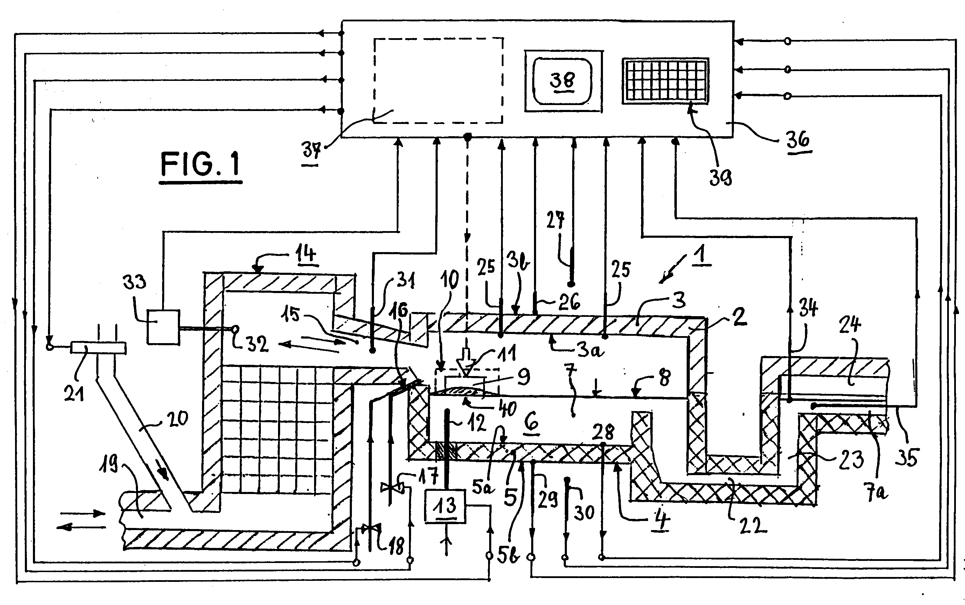

In Figur 1 ist ein Glas-Wannenofen 1 dargestellt, der aus einem Oberofen 2 mit einer Decke 3 und einem Unterofen 4 mit einem Boden 5 besteht. Über dem Boden 5 befindet sich ein Bassin 6, in dem sich eine Glasschmelze 7 mit einem Schmelzenspiegel 8 befindet.

Beiderseits des Bassins befindet sich in spiegelsymmetrischer Anordnung je eine Chargieröffnung 9, von denen hier nur eine sichtbar ist. Jeder Chargieröffnung ist eine Einlegevorrichtung 10 zugeordnet, die hier nur gestrichelt dargestellt ist. Zur Einlegevorrichtung 10 gehört ein Stellglied 11 für die Mengenregulierung, das hier nur durch einen Pfeil angedeutet ist. Im Boden 5 befindet sich ein Paar von Heizelektroden 12, das stellvertretend für mehrere Paare von Heizelektroden stehen kann, und dessen Leistung durch ein bekanntes Stellglied 13 einstellbar ist.

Dem Glas-Wannenofen 1 sind in spiegelsymmetrischer Anordnung zwei Regenerativ-Wärmetauscher 14 vorgeschaltet, von denen nur einer sichtbar und im Schnitt dargestellt ist. Die Verbindung besteht aus je einem Abgaskanal 15, der alternierend als Zuluftkanal für vorgewärmte Verbrennungsluft und als Abgaskanal für die Ofenatmosphäre dient. Durch alternierendes Umschalten der beiden Wärmetauscher und der zugehörigen Brenner werden über dem Schmelzenspiegel 8 U-förmige Flammen ausgebildet, die durch je einen Brenner 16 erzeugt werden, in dessen Gas- und Luftzuleitung je ein Stellglied 17 bzw. 18 in Form eines Regelventils angeordnet ist. Ein im unteren Bereich des Wärmetauschers 14 angeordneter weiterer Abgaskanal 19 dient in gleicher Weise alternierend zur Zufuhr kalter Verbrennungsluft und zur Abfuhr teilweise abgekühlter Ofenatmosphäre. Die Bau- und Betriebsweise derartiger Regenerativ-Wärmetauscher 14 ist bekannt und wird daher nicht weiter erläutert. In diesen Wärmetauscher mündet noch eine Zufuhrleitung 20 mit einem weiteren Stellglied 21 in Form eines Regelventils für Frischluft.

Das andere Ende des Glas-Wannenofens 1 ist über einen Durchlaß 22 und einen Riser 23 mit einem Auslauf 24 verbunden, der zu einer Arbeitswanne oder zu einem Verteilerkanal führt, an den gegebenenfalls mehrere Vorherde angeschlossen sind.

Soweit dies die Temperatur- und anderen Meßfühler betrifft, wird folgendes ausgeführt:

Dem Oberofen 2 bzw. dessen Decke 3 sind Temperaturfühler 25 für die Messung der Temperatur der Innenfläche 3a der Decke 3 zugeordnet. Ein weiterer Temperaturfühler 26 mißt die Temperatur der Außenfläche 3b der Decke 3. Ein weiterer Temperaturfühler 27 mißt die Temperatur der Umgebungsluft über der Decke 3.

Dem Unterofen 4 bzw. dessen Boden 5 sind ein Temperaturfühler 28 für die Erfassung der Temperatur der inneren Bodenfläche 5a und ein weiterer Temperaturfühler 29 für die Erfassung der äußeren Bodenfläche 5b zugeordnet, weiterhin ein Temperaturfühler 30 für die Erfassung der Umgebungstemperatur.

Im Abgaskanal 15 ist ein Temperaturfühler 31 angeordnet, der zur alternativen Erfassung der Temperatur der Verbrennungsluft einerseits und des Abgases andererseits dient. Im Wärmetauscher 14 ist ein Meßfühler 32 in Form einer Sonde angeordnet, die den Sauerstoffgehalt bestimmt. Im Auslauf 24 des Unterofens 4 ist ein weiterer Temperaturfühler 34 für die Bestimmung der Temperatur der abgezogenen Glasschmelze 7a angeordnet. In der Nähe dieses Temperaturfühlers befindet sich im Auslauf 24 des Unterofens 4 ein Meßfühler 35 für die Strömungsmenge bzw. Strömungsgeschwindigkeit, aus der sich die Strömungsmenge bestimmen läßt. Sämtliche Meßsignale sind mittels der in Figur 1 dargestellten Leitungen einzelnen Eingängen einer Regelanordnung 36 aufgeschaltet, wobei die Eingänge durch Pfeilspitzen dargestellt sind. Die Regelanordnung 36 besitzt einen Rechner 37 mit nicht näher dargestellten Datenspeichern, eine Anzeigeeinheit 38 (Display) und eine Eingabetastatur 39, mit der feste, anlagenspezifische Daten, Korrekturfaktoren und Operationsbefehler eingegeben werden können. In der Regelanordnung 36 werden die aufgeschalteten Fühlersignale im Rechner 37 in der Weise verknüpft, daß aus sämtlichen eingegebenen Daten die Wärmestromdichte durch den Schmelzenspiegel 8 bestimmt wird. Die Regelanordnung 36 besitzt weiterhin fünf Ausgänge, die in Figur 1 durch je einen Punkt dargestellt sind, und die zu den Stellgliedern 11, 13, 17, 18 und 21 führen. Dadurch sind alle wesentlichen Betriebsparameter des Glas-Wannenofens 1 beeinflußbar, und zwar in Abhängigkeit von mindestens einem Teil der Fühlersignale, wie dies in der allgemeinen Beschreibung angegeben wurde.

In Figur 1 ist das auf den Schmelzenspiegel 8 aufdosierte Chargiermaterial 40 dargestellt. Zur Bestimmung der Feuchte des Chargiermaterials ist der Einlegevorrichtung 10 noch ein Meßfühler für die Feuchtigkeit zugeordnet, dessen Ausgang gleichfalls der Regelanordnung 36 aufgeschaltet ist. Diese Einzelheiten sind jedoch nicht dargestellt.

Zur Bestimmung der Brennstoffmenge und der Luftmenge für den Brenner 16 können die Stellsignale für die Stellglieder 17 und 18 verwendet werden. Die Signalverarbeitung findet im Innern der Regelanordnung 36 statt und ist daher hier nicht besonders dargestellt. Die Glasdurchsatzmenge kann entweder manuell eingegeben oder mit einer Meßapparatur hinter dem Riser 23 gemessen werden.

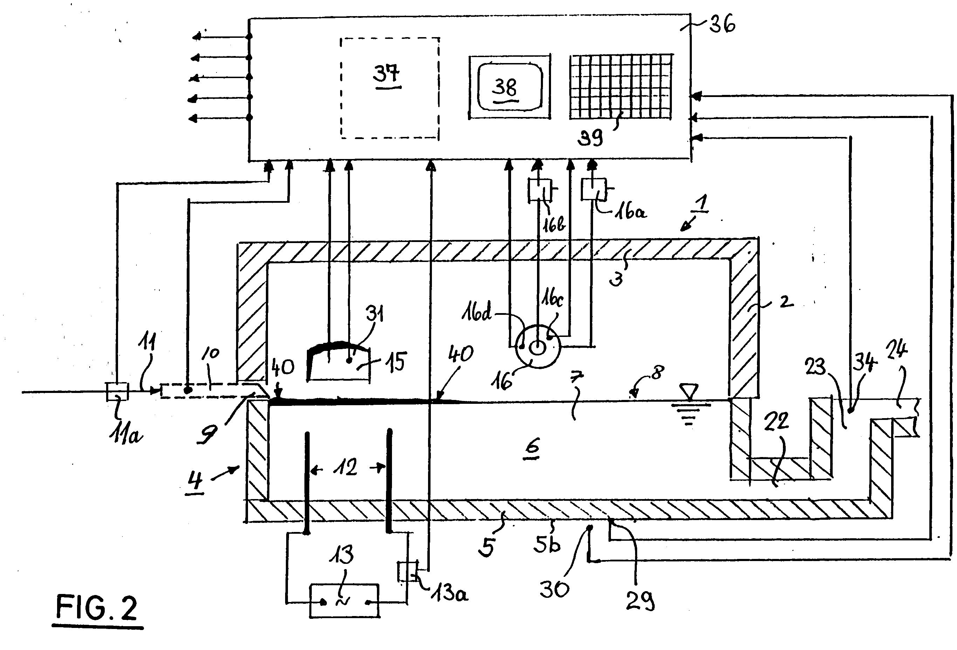

In Figur 2 ist in vereinfachter Darstellung und unter Verwendung der gleichen Bezugszeichen wie in Figur 1 eine Glasschmelzanlage dargestellt, deren Glas-Wannenofen 1 durch eine stirnseitige Einlegevorrichtung 10 beschickt wird. Ein Mengenmeßgerät 11a für die Menge des Beschickungsguts ist durch ein Kästchen angedeutet. Zwei Abgaskanäle 15, von denen nur einer sichtbar ist, sind spiegelsymmetrisch beiderseits der Wannen-Längsachse angeordnet. Beiderseits dieser Längsachse befindet sich mindestens je ein Brenner 16, von denen gleichfalls nur einer dargestellt ist. Die Mengen von Oxidationsgas und Brennstoff werden durch Mengenmeßgeräte 16a und 16b erfaßt, die zugehörigen Temperaturen durch Temperaturfühler 16c und 16d. Die Temperaturfühler 29 und 30 dienen zur Erfassung der Wandverluste des Unterofens 4.

Die Leistung des Heizelektrodenpaares 12 wird durch ein Stellglied 13 geregelt oder gesteuert. Der Strom-Istwert wird durch ein Strommeßgerät 13a der Regelanordnung 36 aufgeschaltet. Wie bei solchen Regelanordnungen üblich, können die Istwerte der einzelnen Regelgrößen auch durch die Stellglieder gewonnen werden, was auch für alle anderen Regelgrößen gilt.

Es ist Figur 2 insbesondere zu entnehmen, daß es keiner langzeitig ansprechenden Temperaturfühler in der Glasschmelze 7 bedarf, um die Anlage zu regeln.

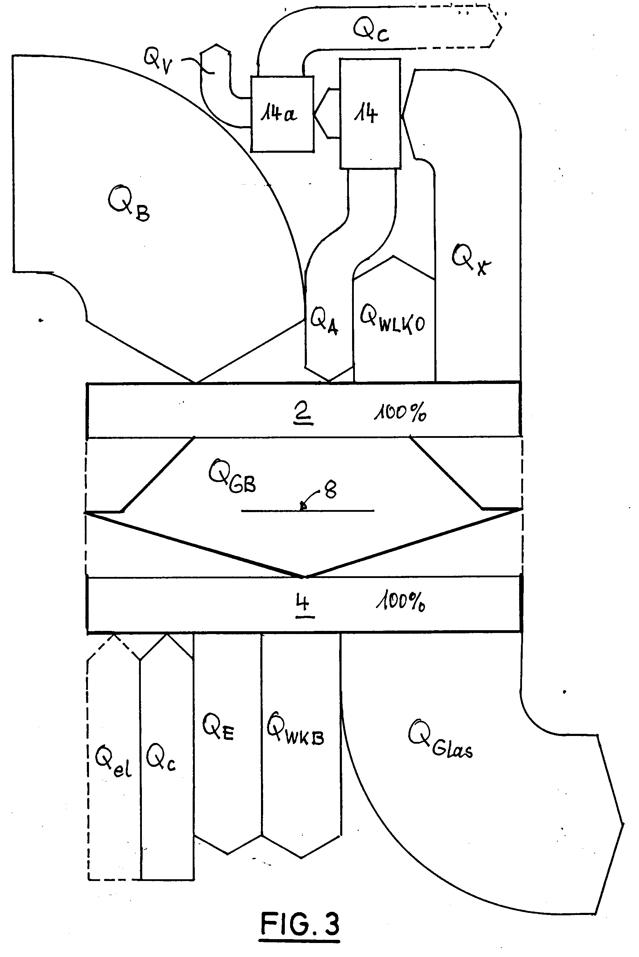

Figur 3 zeigt - nicht maßstäblich - die einzelnen Wärmebilanzen bzw. Wärmeströme: $Q_{GB}$ ist der Wärmestrom vom Oberofen 2 durch den Schmelzenspiegel 8 zum Unterofen 4. $Q_B$ ist der Wärmeinhalt der Brennstoffmenge, $Q_A$ die Enthalpie der im Wärmetauscher 14 vorgewärmten Verbrennungsluft. $Q_{WLKO}$ ist die Summe aller Wand-, Leck- und Kühlverluste des Oberofens 2, wobei die Wandverluste durch die Umgebungsluft, die Leckverluste durch Undichtigkeiten des Ofens und die Kühlverluste beispielsweise durch eine Brennerkühlung entstehen. $Q_X$ sind die mit den Abgasen entweichenden Abgasverluste.

Aus dem Wärmetauscher 14 strömen die Abgase in einen Gutvorwärmer 14a. Die nicht wiedergewinnbaren Abgasverluste sind mit $Q_V$ bezeichnet. $Q_C$ ist die Enthalpie des vorgewärmten Chargiermaterials bzw. des festen Beschickungsguts, die mit diesem dem Unterofen 4 zugeführt wird.

$Q_{el}$ ist die dem Unterofen 4 zugeführte elektrische Heizleistung, falls Heizelektroden vorhanden sind. $Q_E$ ist die endotherme Schmelzwärme und die Energie zum Zersetzen von Karbonaten und zur Bildung von Silikaten. $Q_{WKB}$ sind die praktisch konstanten Wand- und Kühlverluste des Unterofens, wobei die Kühlverluste durch Kühlung der Elektrodenhalter entstehen. $Q_{Glas}$ ist die Enthalpie des geschmolzenen Glases, die mit dem Glas in angeschlossene Aggregate wie Verteiler- und Arbeitswannen, Speiser und Glas-Verarbeitungsmaschinen weitergeleitet wird.

**Patentansprüche**

1.  Verfahren zur Regelung der Beheizung von Glas-Wannenöfen (1) mit einem Oberofen (2) und einem Unterofen (4), in dem aus Chargiermaterial (40) eine Glasschmelze (7) mit einem Schmelzspiegel (8) gebildet und daraus abgezogen wird, mit mindestens einem dem Oberofen (2) zugeordneten Brenner (16), durch den eine zum Schmelzen erforderliche Energiemenge eingebracht wird, wobei Temperaturen und Mengen von Brennstoff, Verbrennungsluft und Beschickungsgut und Wärmemengen der Glasschmelze (7) bestimmt werden, **dadurch gekennzeichnet, daß** laufend aus schmelztechnischen Daten und konstruktionsbedingten thermischen Daten des Glas-Wannenofens (1) ein Wärmestrom durch den Schmelzenspiegel (8) berechnet wird, wobei

    a) zunächst ständig eine Gesamtwärmebilanz für den gesamten Ofen (1) errechnet wird,
    b) von in der Gesamtwärmebilanz enthaltenen und errechneten Wand-, Kühl- und Leckverlusten die ofenbedingten, nahezu unveränderlichen Wand- und Kühlverluste des Unterofens (4) abgezogen werden,
    c) aus einer Wärmebilanz des Oberofens (2) ein Istwert für den Wärmestrom berechnet wird, der an die Glasschmelze (7) übergeben wird,
    d) aus einer Wärmebilanz des Unterofens (4) ein Sollwert für den Wärmestrom errechnet wird, der an die Glasschmelze (7) übergeben und der ständig mit dem unter c) genannten Istwert für den Wärmestrom verglichen wird, und daß
    e) die Differenz der beiden Werte durch Änderung der Energiezufuhr verzögerungsfrei auf einen kleinstmöglichen Wert ausgeregelt wird.

2.  Verfahren nach Anspruch 1, **dadurch gekennzeichnet, daß** die Ausregelung der Abweichungen zwischen Istwert und Sollwert des Wärmestroms mindestens teilweise durch Leistungsregelung mindestens eines in der Glasschmelze befindlichen Heizelektrodenpaares (12) durchgeführt wird.

3.  Verfahren nach Anspruch 1, **dadurch gekennzeichnet, daß** die Bestimmung der Wärmebilanz des Unterofens (4) aus dem Durchsatz an Glasschmelze, der Gemengezusammensetzung, den thermischen Wandverlusten des Unterofens (4), der Solltemperatur der Glasschmelze (7a) am Auslauf (24) zu einer Arbeitswanne oder zu einem Verteilerkanal abzüglich der gegebenenfalls unmittelbar in die Glasschmelze eingespeisten elektrischen Heizenergie und der Enthalpie des zugeführten Schmelzgutes durchgeführt wird.

4.  Verfahren nach Anspruch 1, **dadurch gekennzeichnet, daß** die Bestimmung der Wärmebilanz des Oberofens (2) aus der zugeführten Verbrennungsenergie, der über Vorwärmer für Beschickungsgut und Verbrennungsluft rückgeführten Abgaswärme, Wand-, Leck- und Kühlverluste und der Abgasverluste durchgeführt wird.

5.  Verfahren nach Anspruch 1, **dadurch gekennzeichnet, daß** die Abgasmenge aus der Brennstoffmenge, der Verbrennungsluftmenge, dem Sauerstoffanteil des Abgases und aus den Gemengegasen errechnet wird.

6.  Verfahren nach Anspruch 1, **dadurch gekennzeichnet, daß** zur Berechnung der Abgasenthalpie die Abgasmenge, ihre Temperatur und die spezifischen Wärmeinhalte der Abgasbestandteile herangezogen werden.

7.  Verfahren nach Anspruch 1, **dadurch gekennzeichnet, daß** die Regelung durch Veränderung des Verhältnisses von Brennstoff zu Luft (Lambda-Wert) im Oberofen (2) durchgeführt wird.

8.  Verfahren nach Anspruch 7, **dadurch gekennzeichnet, daß** zwecks Herbeiführung reduzierenden Betriebsbedingungen der Sauerstoffgehalt der Abgase des Oberofens (2) gemessen und auf einen vorgegebenen Minimalwert geregelt wird.

9.  Verfahren nach Anspruch 1, **dadurch gekennzeichnet, daß** zwecks Minimierung der Heizkosten das Verhältnis der Brennstoffzufuhr zur Elektrobeheizung nach Maßgabe der Kosten für die jeweilige Energieeinheit gewählt wird.

10. Verfahren nach Anspruch 1, **dadurch gekennzeichnet, daß** der Sollwert des Wärmestroms vom Oberofen (2) zum Unterofen (4) nach Maßgabe des Massendurchsatzes der Glasschmelze (7) im Unterofen (4) gewählt wird, derart, daß ein höherer Durchsatz durch eine höhere spezifische Wärmestromdichte kompensiert wird und umgekehrt.

**Claims**

1. Method for regulating the heating of glass-melting tank furnaces (1) comprising a top furnace (2) and a bottom furnace (4) in which a glass melt (7) with a melt mirror (8) is made from a charge material (4) and drawn off, with at least one burner (16) associated with the top furnace (2) by means of which an amount of energy as required for melting is delivered, and temperatures and amounts of fuel, combustion air and charge material and amounts of heat of the glass melt (7) are determined, **characterised in that** a heat flow through the melt mirror (8) is continuously calculated from melt-technical data and structural thermal data of the glass-melting tank furnace (1), and

   a: initially a total heat balance for the entire furnace (1) is continuously calculated;
   b: virtually unchanging wall and cooling losses of the bottom furnace (4) as dictated by the furnace are extracted from the wall, cooling and leakage losses which are part of the overall heat balance and calculated;
   c: an actual value for the heat flow which is transferred to the glass melt (7) is calculated from a heat balance of the top furnace (2);
   d: from a heat balance of the bottom furnace (4) is calculated a nominal value for the heat flow which is transferred to the glass melt (7) and continuously compared with the nominal value shown under c) for the heat flow; and
   e: the difference of both values is without delay levelled to a smallest possible value by changing the energy delivery.

2. Method according to Claim 1, **characterised in that** levelling of deviations between actual value and nominal value of the heat flow is carried out at least partially by output regulation of at least one pair of heating electrodes (12) placed in the glass melt.

3. Method according to Claim 1, **characterised in that** the determination of the heat balance of the bottom furnace (4) is made from the throughput of glass melt, quantitative composition, thermal wall losses of the bottom furnace (4), nominal temperature of the glass melt (7a) at the discharge (24) to an operational trough or to a distributing channel minus electrical heating energy which is, if appropriate, fed directly into the glass melt, and the enthalpy of delivered melting material.

4. Method according to Claim 1, **characterised in that** the determination of the heat balance of the top furnace (2) is based on delivered combustion energy, waste gas heat fed back via preheaters for charge material and combustion air, wall, leakage and cooling losses and waste gas losses.

5. Method according to Claim 1, **characterised in that** the waste gas volume is calculated from the quantity of fuel, the quantity of combustion air, the oxygen proportion of the waste gas and from the gas contents.

6. Method according to Claim 1, **characterised in that** the waste gas volume, its temperature and specific heat contents of the waste gas portions are used to calculate the waste gas enthalpy.

7. Method according to Claim 1, **characterised in that** regulation is performed by changing the ratio between fuel and air (Lambda value) in the upper furnace (2).

8. Method according to Claim 7, **characterised in that** the oxygen content of the waste gases of the top furnace (2) is measured and regulated to a specified minimum value for the purpose of establishing reducing operating conditions.

9. Method according to Claim 1, **characterised in that** the ratio of fuel delivery for electric heating is selected according to the cost for a respective energy unit for the purpose of minimisation of heating costs.

10. Method according to Claim 1, **characterised in that** the nominal value of the heat flow from top furnace (2) to bottom furnace (4) is selected according to the mass throughput of the glass melt (7) in the lower furnace (4) so that a higher throughput is compensated by higher specific heat-flow density and vice versa.

**Revendications**

1. Procédé pour la régulation du chauffage dans des fours à cuve de fusion du verte (1) comprenant un four supérieur (2) et un four inférieur (4) dans lequel on forme une fonte de verre (7) avec une surface de fusion (8) à partir du matériau chargé (40), et cette fonte de verte est extraite hors du four inférieur, comprenant au moins un brûleur (16) associé au four supérieur (2), au moyen duquel on apporte une quantité d'énergie nécessaire pour la fusion, procédé dans lequel on détermine les températures et les quantités de carburant, d'air de combustion et du produit chargé, ainsi que les quantités calorifiques de la fonte de verte (7), caractérisé en ce que l'on calcule en permanence, à partir des données techniques concernant la fusion et à partir des données thermiques concernant la structure du four à cuve (1), un flux thermique à travers la surface de fusion (1), et

a) on calcule tout d'abord en permanence un bilan thermique total pour la totalité du four (1) ;
b) depuis les pertes par les parois, les pertes de refroidissement et les pertes par fuites, qui sont contenues dans le bilan thermique total et qui sont calculées, on soustrait les pertes par les parois et les pertes de refroidissement du four inférieur (4), spécifiques au four et pratiquement invariables ;
c) à partir d'un bilan thermique du four supérieur (2) on détermine une valeur réelle pour le flux thermique qui est transféré à la fonte de verre (7) ;
d) à partir d'un bilan thermique du four inférieur, on calcule une valeur de consigne pour le flux de chaleur qui est transféré à la fonte de verre (7), et qui est en permanence comparée avec la valeur réelle citée sous le point c) pour le flux thermique ; et
e) la différence des deux valeurs est régulée sans retard par modification de l'apport d'énergie, jusqu'à la plus petite valeur possible.

2. Procédé selon la revendication 1, caractérisé en ce que la régulation des écarts entre la valeur réelle et la valeur de consigne est exécutée au moins partiellement par régulation de la puissance d'au moins une paire d'électrodes de chauffage (12) qui se trouvent dans la fonte en fusion.

3. Procédé selon la revendication 1, caractérisé en ce que la détermination du bilan thermique du four inférieur (4), est exécutée à partir de la capacité de fusion de verre, de la composition du mélange, des pertes thermiques par les parois du four inférieur (4) et de la température de consigne de la fonte de verre (7a) au niveau de la sortie (24) vers une cuve de travail ou vers un canal de répartition, après soustraction de l'énergie de chauffage électrique apportée à la fonte de verte, directement le cas échéant dans la fonte de verte, et de l'enthalpie du produit de fusion admis.

4. Procédé selon la revendication 1, caractérisé en ce que la détermination du bilan thermique du four supérieur (2) est exécutée à partir de l'énergie de combustion apportée, de la chaleur des gaz d'échappement retournés via le préchauffeur pour le produit à charger et pour l'air de combustion, à partir des pertes par les parois, par les fuites et les pertes de refroidissement, et des pertes liées aux gaz d'échappement.

5. Procédé selon la revendication 1, caractérisé en ce que la quantité de gaz d'échappement est calculée à partir de la quantité de carburant, de la quantité d'air de combustion, de la proportion d'oxygène dans les gaz brûlés, et à partir des gaz constituant le mélange.

6. Procédé selon la revendication 1, caractérisé en ce que pour le calcul de l'enthalpie des gaz d'échappement, on utilise la quantité de gaz d'échappement, leurs températures, et la teneur calorifique spécifique des composants du gaz échappement.

7. Procédé selon la revendication 1, caractérisé en ce que la régulation est exécutée par modification du rapport entre le carburant et l'air dans le four supérieur (2), égal à la valeur lambda.

8. Procédé selon la revendication 7, caractérisé en ce que, dans la mesure d'assurer des conditions de fonctionnement réductrices, la teneur en oxygène des gaz d'échappement du four supérieur (2) est mesurée et régulée à une valeur minimale prédéterminée.

9. Procédé selon la revendication 1, caractérisé en ce que, dans le but de minimiser les coûts de chauffage, le rapport entre l'admission de carburant et le chauffage électrique est choisi selon la valeur des coûts pour l'unité énergétique respective.

10. Procédé selon la revendication 1, caractérisé en ce que la valeur de consigne du flux de chaleur depuis le four supérieur (2) jusqu'au four inférieur (4) est choisie à proportion de la capacité en masse de la fonte de verte (7) dans le four inférieur (4), de sorte qu'une capacité plus élevée est compensée grâce à une densité de flux thermique spécifique plus élevée, et inversement.

FIG.1

FIG.2

EP 0 748 773 B1

12

FIG. 3